# EUROPEAN PATENT SPECIFICATION

(11) **EP 2 232 352 B1**
(45) Date of publication and mention of the grant of the patent: **04.01.2012**
(21) Application number: 08870174.3
(22) Date of filing: 24.10.2008
(51) Int. Cl.: F16H 63/30

(54) **MECHANISM TO ENGAGE GEARS IN MOTION**
MECHANISMUS ZUM EINKUPPELN VON ZAHNRÄDERN IN BEWEGUNG
MÉCANISME POUR ENGAGER DES ROUES DENTÉES EN MOUVEMENT

(30) Priority: 15.11.2007 IN MU22562007
(43) Date of publication of application: 29.09.2010
(73) Proprietor: Mahindra And Mahindra, Maharashtra (IN)
(72) Inventor: GILL, Sanjay, Nashik 422 007 Maharashtra (IN); ADIGA, Ganesh, Nashik 422 007 Maharashtra (IN); RAO, Srinivas, K., V., V., Nashik 422 007 Maharashtra (IN); RANADE, Nitin, Shankar, Nashik 422 007 Maharashtra (IN)
(74) Representative: Thomson, Neil David
(86) International application number: PCT/IN2008/000702
(87) International publication number: WO 2009/087654

(56) References cited:
- EP-A2- 1 108 924
- DE-C1- 4 337 279
- FR-A- 1 122 892
- JP-A- 3 037 458
- JP-A- 63 199 945
- US-A- 4 475 639
- US-A- 4 523 668
- US-A- 4 944 378
- US-A- 5 027 672
- US-A- 5 845 531
- US-A- 5 968 604
- US-A- 6 109 128
- US-B1- 6 370 977

## Description

### Field of Invention:

Present invention generally relates to the manual transmission of automobiles. In particular it relates to the design of the reverse gear system.

### Background of Invention:

As is well known to a person skilled in the art, manual transmissions are shifted by the vehicle operator moving a gearshift lever which functions, through a shift mechanism, to selectively engage one of a plurality of gear sets for driving the output shaft in a first direction and at a predetermined speed ratio relative to the input shaft. In particular, most manual transmissions include a plurality of synchromesh gear sets which can be selectively engaged for establishing the different forward gears.

Additionally, many manual transmissions are equipped with a reverse idler assembly which can be selectively engaged for establishing the reverse gear. Typically, the reverse idler assembly includes a reverse input gear driven by the input shaft, a reverse output gear fixed on the output shaft through spline / keyway joint, and a reverse idler gear which is selectively movable into meshed engagement with the reverse input gear and the reverse output gear for driving the output shaft in a second direction and at a predetermined speed ratio relative to the input shaft for establishing the reverse gear.

During operation of the motor vehicle, one of the forward gears is typically disengaged immediately prior to selection of the reverse gear. As such, the input shaft is free to continue rotating due to inertia under a substantially no-load condition until, through friction and windage losses, the inertia of the input shaft is dissipated and rotation is arrested. If the vehicle operator moves the gearshift lever in an attempt to engage the reverse idler gear while the input shaft is still rotating, the teeth of the reverse idler gear will strike the teeth of the reverse output gear. As such, the force applied by the vehicle operator through the gearshift lever results in an undesirable clattering. This is because the teeth of the reverse idler gear are forced into contact with the teeth of the reverse output gear, but yet are unable to mesh therewith because of the relative rotational speeds. This condition, commonly referred to as "reverse clash", results in an unpleasant grinding noise and the clashing is felt by the vehicle operator.

To avoid this condition, the vehicle operator must wait for the input shaft to stop rotating before the gearshift lever can be moved quietly and smoothly to engage the reverse gear. Unfortunately, any time delay required before the gearshift lever can be moved to engage reverse gear in order to avoid the occurrence of reverse clash is objectionable. It was therefore thought by many designers of a gearbox that reverse clash can be virtually eliminated by stopping rotation of the input shaft before an attempt is made to engage the reverse idler gear with the reverse output gear.

Some of the existing synchronized reverse gear systems are disclosed in the US patents 4,510,818, 5845531, and 6,109,128.

One known technique for eliminating reverse clash is to provide the transmission with a synchronized reverse gear assembly. Exemplary synchronized reverse gear assemblies are disclosed in U.S. Pat. Nos. 4,510,818; 4,558,607; 4,640,141 and 5,385,065. However, the cost and complexity associated with incorporating synchronized reverse gear assembly into the transmission is not always commercially justified. As an example, the US patent 4,510,818 attempts to provide a device for preventing reverse gear buzzing caused by the meshing noise of the reverse idler gear at the reverse gear change, so as to eliminate unpleasant gear buzzing as well as to improve the shift feeling. It discloses an arrangement incorporating a synchromesh unit. The synchronizing effect of the synchromesh unit for the forward speeds which is shifted in the same direction as the reverse shift direction may be utilized for the reverse shifting operation, thereby stopping or slowing down the inertial rotation of the input shaft.

As alternatives, several reverse brake arrangements have been developed for use in manual transmissions equipped with a non-synchronized reverse gear assembly. Exemplary reverse brake arrangements are disclosed in U.S. Pat. Nos. 4,225,024; 4,294,338 and 4,598,599. While these prior known devices have proven to be satisfactory for then intended purpose, each is attendant with its own drawbacks and inherent limitations. Thus, there remains an ongoing need in the art for a simple, inexpensive reverse brake for a manual transmission which is effective to eliminate gear clash when shifting the transmission into reverse gear from a forward gear.

Glen W Fraley, et al, in the US Patent no. 5,845,531 disclosed another system with a reverse brake incorporated into the gear train of a manual transmission. The brake functions to stop inertial rotation of the input shaft prior to engagement of reverse gear. In particular, a constant-mesh gearset is operable with a clutch to establish a forward drive connection between the input shaft and the output shaft, and is further operable with another clutch to brake rotation of the input shaft without establishing a forward drive connection with the output shaft. However, even this gear suffers from some drawbacks such as excessive number of parts and associated extra cost and cumbersome design.

Mazet Stephane, in US Patent 6,109,128, disclosed a reverse gear system with a reverse gear axle mounted in the housing parallel to the input and output shafts. It incorporates two idler gears freely rotatably on the shaft, one gear engaging a fixed gear on the input shaft, the other engaging a fixed gear on the output shaft. A reverse synchronizing device is located between the two idler gears for engaging reverse gear ratio. The synchronizer includes a jaw clutching sleeve splined to one of the idler gears, and is slidable towards the other idler gear to actuate a synchronizing clutch. One of the key drawbacks of this system is it is complicated and adds to the cost of the gearbox system. JP 03037458 A discloses a reverse idler gear having a projection which contacts a rubber member on the reverse idler shaft during axial travel of the gear along the shaft.

It is clear that some of the drawbacks that the existing reverse gear system have are:
a. They have a great number of parts to manage the reverse gears, which complicates the gearbox assembly
b. Cost of the gearbox increases on account of greater number of parts
c. Gearbox becomes bulky; increased size of the gearbox and greater number of parts also result in increased overall weight of the transmission system.
d. Gearbox design is more complex & hence also leads to larger no. of potential failure modes.
e. Such systems cannot be easily incorporated into existing vehicles

There is need for a simplified reverse gear engagement system that will reduce the number of parts, cause less noise at the time of reverse gear operation, and consequently provide an economical gearbox.

### The objects of the invention:

Accordingly, the main object of the invention is to provide a manual gearbox that has a simple mechanism for engagement of reverse gear.

A further object of the invention is to provide a mechanism for engagement of the reverse gear that is easy to install on OEM gearboxes of other manufacturers either for new or existing automobiles.

Yet another object of the present invention is to provide a reverse gear engagement mechanism that is cost effective in installing and maintaining.

A still further object of the present invention is to reduce the noise and wear and tear of the gear box components that takes place during the reverse gear engagement.

### Summary of the invention

The invention comprises a reverse gear engagement mechanism that engages reverse gear effectively and while minimizing the reverse gear wear and tear and the noise level. It works by reducing the speed of reverse idler gear to a level required for reverse gear engagement, before engaging with the reverse fixed gear. The invention can be installed on new and existing automobiles that have manual gearboxes.

The mechanism used for the speed reduction comprises specially designed and located friction elements that reduce the speeds of axial and rotational motions of the reverse idler gear. The axial and rotational speeds are reduced to a range where
the reverse idler gear engages with the reverse fixed gear smoothly, thereby causing minimal noise and wear and tear of the engaging parts.

### List of parts

Gear Train (1) Output Shaft (2) Counter shaft (3)
Pinion on Counter Shaft (3a)
Reverse idler gear (4)
Idler shaft (5)
Reverse fixed gear (6)
Reverse shift fork (7)
Fork pads or prongs (7a)
Gear groove (8)
Annular collar (9)
Chamfer (10)
Wire groove (11)
Wire (12)

### Brief description of figures

Figure 1 shows the overall gear train
Figure 1A shows a typical cross section through the gear train
Figure 2 shows the shift fork
Figure 3 shows the idler shaft and the wire
Figure 4 shows the position of wire spring when the reverse gear is in neutral position, and also the details of wire placed in the wire groove Figure 5 shows the reverse idler gear in reverse-gear-engaged position

### Detailed description of the invention:

The present invention discloses a novel mechanism to engage the reverse gear by causing minimal noise and component wear and tear.

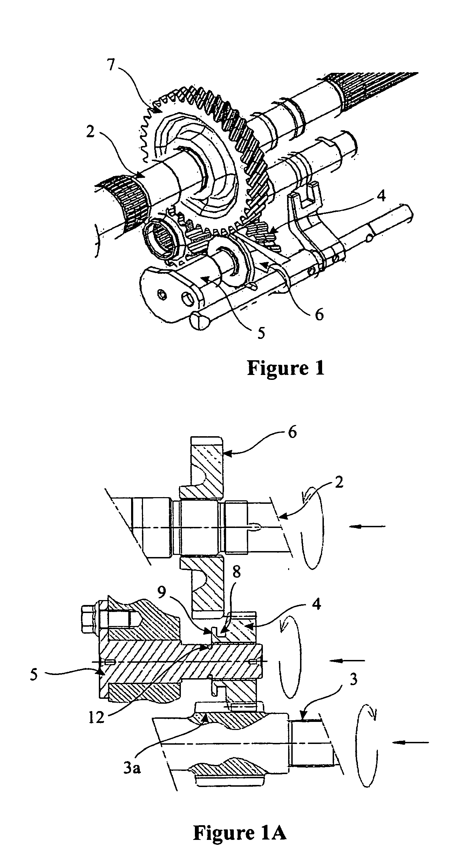

As shown in figures 1 and 1A, a typical gear box comprises a gear train (1) for forward motion and a separate gear system for reverse motion. The reverse gear system typically comprises a pair of reverse gears, a reverse idler gear (4) and a reverse fixed gear (6).

A counter shaft gear (3a) is always engaged with the reverse idler gear (4). The reverse idler gear (4), engaged with the counter shaft gear (3a), is moved axially into a position where it engages with the reverse fixed gear (6). In manual transmission systems, this is achieved by manually moving the reverse idler gear (4) over a reverse idler shaft (5). The relative rotational speeds of the two reverse gears (4 and 6) must be within a suitable limit so that the reverse gear engagement occurs without unacceptable level of noise and wear and tear of gear components. This is normally achieved by reducing the rotational speed of the reverse idler gear (4).

In order that the rotational speed of the reverse idler gear (4) reduces into a required range, a novel mechanism is provided in the present invention. The novel mechanism of the present invention comprises a reverse idler gear (4) with a special arrangement to impede the axial movement of the gear, a reverse shift fork (7) with specially constructed fork pads (7a) to impede the rotational movement of the gear, and an idler shaft (5) provided with a special arrangement.

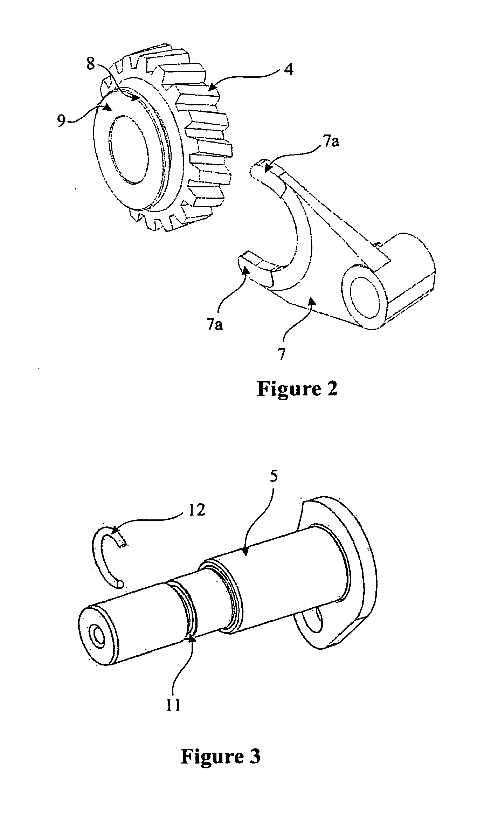

The reverse idler gear (4) of the present invention is provided with a groove (8), which is formed by provision of an annular collar (9). A reverse shift fork (7) (see Figure 2) engages with its fork prongs (7a) with the groove (8). A novel feature of the present invention is that the prongs (7a) of the shift fork (7) are provided with special friction lining. The fork pads of the prongs (7a) are embedded with a layer of high friction coefficient material. This material can be any material that is suitable for the purpose and which a person skilled in the art knows. Inventors have surprisingly found that natural or treated cork works well for this purpose.

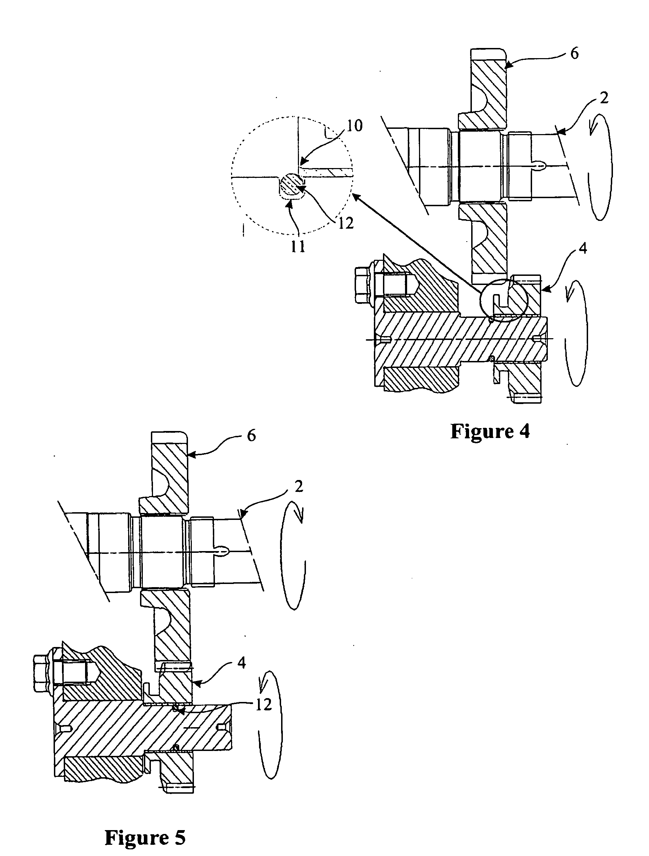

The contact of the shift fork prongs (7a) with the inside surface of the rotating annular collar (9), under the application of an axial force, creates a frictional torque that results in reduction of rotational speed of the reverse idler gear (4). The area of friction lining depends on the reflected inertia of the entire gear train that is engaged with the reverse idler gear (4) at the time of starting is axial movement. The bonding strength of the friction material on the fork prongs (7a) is ensured to be greater than shear stress resulting from the friction torque generated between the annular collar (9) of the idler gear and the fork prongs (7a). Another novel feature of the present invention is the mechanism provided to afford more time in which the rotational speed reduction of the reverse idler gear (4) takes place. The inventors found that if axial resistance is applied to the reverse idler gear's (4) longitudinal motion on the idler shaft (5), it advantageously allows more time for reduction of the rotational speed of the reverse idler gear (4) under the action of the frictional torque. This is achieved by placing an obstruction in the path of the axial movement of the reverse idler gear (4). A wire (12) made of hardened material is placed inside a circumferential groove (11) made in the reverse idler shaft (5) (see Figure 3). The size and shape of the circumferential groove (11) is such that the wire (12) has sufficient room to adjust its position when it comes under the reverse idler gear (4) and remain in the pressed position throughout the operation of the reverse gear (see Figure 5).

The inventors have advantageously found that the wire (12), when under the radial pressure, adheres to the bore surface of the reverse idler gear (4). This arrangement advantageously eliminates any relative movement between the wire spring (12) and the reverse idler gear (4), consequently eliminating any wear and tear resulting from relative motion. As a result, the soft bush running under the reverse idler gear (4) bore would not wear as the wire ring (12) would continuingly rotate with the bore in the reverse shifted condition.

The location of the circumferential groove (11) is such that the reverse idler gear (4) travels sufficient distance along the reverse idler shaft (5) requiring sufficient time for the required rotational speed reduction. At the end of its axial movement, the reverse idler gear (4) has the required rotational speed and is positioned such that it can engage smoothly, with minimal noise, and without collision with the reverse fixed gear (6).

To facilitate the reverse idler gear (4) to pass over the wire (12), a chamfer (10) is provided at the front end of the reverse idler gear (4) (See Figure 4). The chamfer size and the diameter of the wire (12) is so designed that the movement of the reverse idler gear (4) over the wire (12) is as effortless as possible. Sufficient radial and axial clearance are provided in the circumferential groove (11) to avoid heat generation and welding of the rotating wire ring (12) onto the stationary idler shaft (5).

When the reverse fixed gear (6) is disengaged and the reverse idler gear (4) moves back to its neutral position, the wire spring (12) springs back to its original position.

The wire spring may be made out of hollow wire. The cross-sectional shape of the wire spring may be any shape suitable for the purpose.

In another embodiment of the present invention, a closed ended wire ring is provided instead of the open ended wire ring.

In a further embodiment of the present invention, a ball and socket arrangement with an axial coil spring is provided at predetermined locations. During the reverse gear engagement process, the reverse idler gear presses and holds the ball in pressed position.

While the above description contains many specificities, these should not be construed as limitation in the scope of the invention, but rather as an exemplification of the preferred embodiments thereof. Many other variations are possible. Accordingly, the scope of the invention should be determined not by the embodiments illustrated, but by the appended claims.

## Claims

1. A mechanism to engage gears in motion, said mechanism comprising a reverse idler gear (4), an idler shaft (5), and a reverse shift fork (7), wherein
said reverse idler gear (4) is provided with a groove (8), said groove in turn being formed by provision of an annular collar (9);
said reverse idler gear (4) has a soft bush under it;
said reverse shift fork (7) engages with the help of its fork prongs (7a) with said groove (8), said prongs of said reverse shift fork being provided with special friction lining;
an obstruction is placed on the idler shaft (5), said obstruction being created by making a circumferential groove (11) on said idler shaft, in which said groove a wire (12) made of hardened material is placed such that said wire has sufficient room to adjust its own position when it comes under said reverse idler gear (4) during the gear's lateral movement and remain in the pressed position throughout the operation of said reverse idler gear;
and wherein the location of said circumferential groove (11) is such that:
a. said reverse idler gear (4) travels sufficient distance along the reverse idler shaft (5) requiring sufficient time for the required rotational speed reduction, and
b. said reverse idler gear (4) is positioned such that it can engage smoothly, with minimal noise, and without collision with the reverse fixed gear (6);
and wherein when said reverse gear (6) is disengaged and the reverse idler gear (4) moves back to its neutral position, the wire spring (12) springs back to its original position.

2. A mechanism to engage gears in motion as claimed in claim 1, wherein a chamfer (10) is provided at the front end of said reverse idler gear (4).

3. A mechanism to engage gears in motion as claimed in claim 2 wherein said wire is hollow in its cross section.

4. A mechanism to engage gears in motion as claimed in claim 3, wherein the cross-sectional shape of said wire is any shape suitable for the purpose for which it is employed.

5. A mechanism to engage gears in motion as claimed in claim 4, wherein said obstruction is in the form of at least one assembly, said assembly comprising a ball, a socket, and an axial coil spring such that said reverse idler gear presses and holds in pressed position the ball during the reverse gear engagement process.

6. A mechanism to engage gears in motion as claimed in claim 5, wherein said prongs (7a) of said shift fork (7) are lined with high friction material, preferably natural or treated cork.

## Patentansprüche

1. Mechanismus zum Einkuppeln von Zahnrädern in Bewegung, wobei der Mechanismus ein Rücklaufrad (4), eine Zwischenwelle (5) und eine Rückwärtsgang-Schaltgabel aufweist, **dadurch gekennzeichnet, dass**
das Rücklaufrad (4) mit einer Nut (8) ausgestattet ist, wobei die Nut (8) wiederum durch Bereitstellung eines ringförmigen Kragens (9) gebildet wird;
das Rücklaufrad (4) unterhalb eine weiche Buchse aufweist;
die Rückwärtsgang-Schaltgabel (7) mit Hilfe ihrer Gabelzinken (7a) mit der Nut (8) in Eingriff gelangt, wobei die Zinken der Rückwärtsgang-Schaltgabel mit einem speziellen Reibbelag versehen sind;
ein Hindernis bzw. eine Blockierung auf der Zwischenwelle (5) angeordnet wird, wobei das Hindernis bzw. die Blockierung durch Herstellung einer umlaufenden Nut (11) auf der Zwischenwelle erzeugt wird, in welche Nut ein Draht (12) aus gehärtetem Werkstoff so eingelegt wird, dass der Draht ausreichend Platz hat, um seine eigene Lage anzupassen, wenn er unter das Rücklaufrad (4) während der seitlichen Bewegung des Zahnrads gerät, und dass er während des gesamten Betriebs des Rücklaufrads in der zusammengedrückten Position verbleibt;
und dass die Anordnung der umlaufenden Nut (11) derart ausgelegt ist, dass:
a. das Rücklaufrad (4) eine ausreichende Distanz entlang der Zwischenwelle bzw. Rücklaufachse (5) läuft, was ausreichend Zeit für die erforderliche Reduzierung der Drehgeschwindigkeit erfordert; und
b. das Rücklaufrad (4) derart angeordnet ist, dass es mit minimalem Geräusch weich bzw. leichgängig einkuppeln kann, und ohne dass es mit dem festen Rückwärtsgang (6) zusammenstößt, und wobei die Drahtfeder (12) zurück in ihre ursprüngliche Position springt, wenn der Rückwärtsgang (6) ausgerückt ist und sich das Rücklaufrad (4) zurück in seine neutrale Position bewegt.

2. Mechanismus zum Einkuppeln von Zahnrädern in Bewegung nach Anspruch 1, **dadurch gekennzeichnet, dass** eine Auskehlung (10) am vorderen Ende des Rücklaufrads (4) bereitgestellt ist.

3. Mechanismus zum Einkuppeln von Zahnrädern in Bewegung nach Anspruch 2, **dadurch gekennzeichnet, dass** der Draht in seinem Querschnitt hohl ist.

4. Mechanismus zum Einkuppeln von Zahnrädern in Bewegung nach Anspruch 3, **dadurch gekennzeichnet, dass** die Querschnittsform des Drahts jede beliebige Form sein kann, welche für seinen Anwendungszweck geeignet ist.

5. Mechanismus zum Einkuppeln von Zahnrädern in Bewegung nach Anspruch 4, **dadurch gekennzeichnet, dass** das Hindernis bzw. die Blockierung in Form mindestens einer Baugruppe vorliegt, wobei die Baugruppe eine Kugel, eine Buchse sowie eine axiale Sprung- bzw. Spiralfeder aufweist, so dass das Rücklaufrad während des Vorgangs des Einlegens des Rückwärtsgangs auf die Kugel drückt und diese gedrückt hält.

6. Mechanismus zum Einkuppeln von Zahnrädern in Bewegung nach Anspruch 5, **dadurch gekennzeichnet, dass** die Zinken (7a) der Schaltgabel (7) einen hochfesten Reibbelag aufweisen, vorzugsweise Naturkork oder behandelten Kork.

## Revendications

1. Mécanisme permettant l'engrènement de pignons en mouvement, ledit mécanisme comprenant un pignon intermédiaire de marche arrière (4), un arbre intermédiaire (5), et une fourchette de boîte de marche arrière (7), dans lequel
ledit pignon intermédiaire de marche arrière (4) est muni d'une rainure (8), ladite rainure est à son tour formée en procurant un collet annulaire (9).
ledit pignon intermédiaire de marche arrière(4) a une bague souple dessous ;
ladite fourchette de boîte de marche arrière (7) s'engage à l'aide de ses dents de fourchette (7a) avec ladite rainure (8), lesdites dents de ladite fourchette de boîte de marche arrière étant pourvues d'une garniture spéciale ;
une obstruction est placée sur l'arbre intermédiaire (5), ladite obstruction étant produite en ménageant une rainure circonférentielle (11) sur ledit arbre intermédiaire, dans ladite rainure, un fil (12) réalisé en matériau durci est placé de sorte que ledit fil ait suffisamment d'espace libre pour ajuster sa propre position lorsqu'il se place sous ledit pignon intermédiaire de marche arrière (4) pendant le mouvement latéral du pignon et pour rester dans la position enfoncée tout au long du fonctionnement dudit pignon intermédiaire de marche arrière ;
et où l'emplacement de ladite rainure circonférentielle (11) est tel que :
a. ledit pignon intermédiaire de marche arrière(4) se déplace d'une distance suffisante le long de l'arbre intermédiaire de marche arrière (5) nécessitant un temps suffisant pour réduire la vitesse de rotation requise, et
b. ledit pignon intermédiaire de marche arrière (4) est positionné de sorte qu'il puisse s'engager sans heurts, avec un minimum de bruit, et sans risque de collision avec le pignon fixe de marche arrière (6),
et où lorsque ledit pignon de marche arrière (6) est désengagé et le pignon intermédiaire de marche arrière (4) revient à sa position neutre, le ressort à fil (12) retourne à sa position initiale.

2. Mécanisme permettant d'engrener des pignons en mouvement tel que revendiqué dans la revendication 1, dans lequel un chanfrein (10) est prévu au niveau de l'extrémité avant dudit pignon intermédiaire de marche arrière (4).

3. Mécanisme permettant d'engrener des pignons en mouvement tel que revendiqué dans la revendication 2 dans lequel ledit fil est creux dans sa section transversale.

4. Mécanisme permettant d'engrener des pignons en mouvement tel que revendiqué dans la revendication 3, dans lequel la forme en section transversale dudit fil est toute forme adaptée à l'emploi qui en est fait.

5. Mécanisme permettant d'engrener des pignons en mouvement tel que revendiqué dans la revendication 4, dans lequel ladite obstruction est sous la forme d'au moins un ensemble, ledit ensemble comprenant une rotule de centrage, une douille, et un ressort hélicoïdal axial de sorte que ledit pignon intermédiaire de marche arrière appuie sur et maintienne en position enfoncée la rotule de centrage durant le processus d'engrènement du pignon de marche arrière.

6. Mécanisme permettant d'engrener des pignons en mouvement tel que revendiqué dans la revendication 5, dans lequel lesdites dents (7a) de ladite fourchette de boîte (7) sont revêtues avec un matériau à coefficient de friction élevé, de préférence du liège naturel ou traité.
